**Europäisches Patentamt**

**European Patent Office**

**Office européen des brevets**

(19)

(11) Veröffentlichungsnummer : **0 336 088 B1**

(12)

# EUROPÄISCHE PATENTSCHRIFT

(45) Veröffentlichungstag der Patentschrift :
06.03.91 Patentblatt 91/10

(51) Int. Cl.⁵ : **B60J 7/12**

(21) Anmeldenummer : **89102874.8**

(22) Anmeldetag : **18.02.89**

(54) **Schwenkunterstützung eines den unteren Abschluss eines Klappverdecks bildenden Dachhauthaltebügels.**

(30) Priorität : 31.03.88 DE 3811010
14.01.89 DE 3901051

(43) Veröffentlichungstag der Anmeldung :
11.10.89 Patentblatt 89/41

(45) Bekanntmachung des Hinweises auf die
Patenterteilung :
06.03.91 Patentblatt 91/10

(84) Benannte Vertragsstaaten :
ES FR GB IT

(56) Entgegenhaltungen :
US-A- 4 573 732

(73) Patentinhaber : Daimler-Benz
Aktiengesellschaft
Postfach 600202 Mercedesstrasse 136
W-7000 Stuttgart 60 (DE)

(72) Erfinder : Gmeiner, Günter
Hans Holbeinstrasse 17
W-7032 Sindelfingen (DE)
Erfinder : Grabner, Christian
Im Spatzennest 16
W-7261 Gechingen (DE)
Erfinder : Schrader, Jürgen
Breitensteiner Strasse 5/3
W-7030 Böblingen (DE)
Erfinder : Moeller, Hermann
Blücherstrasse 11
W-7034 Gärtringen (DE)
Erfinder : Die andere Erfinder haben auf ihre
Nennung verzichtet

EP 0 336 088 B1

**Beschreibung**

Die Erfindung befaßt sich mit der Schwenkunterstützung eines den unteren Abschluß eines Klappverdecks bildenden Dachhauthaltebügels der im Oberbegriff des Patentanspruchs 1 angegebenen Art.

Eine derartige Schwenkunterstützung ist aus der DE-A-16 30 305 bereits als bekannt zu entnehmen. Bei diesem Stand der Technik liegt beidseitig eines Kraftwagens in den Schenkeln eines Verdeckkastens jeweils ein etwa horizontal angeordneter Hydraulikzylinder, dessen hauptspriegelabgewandtes Ende an einen karosseriefesten Lagerbock angelenkt ist. Durch Druckbeaufschlagung der Hydraulikzylinder, die unter Ansteuerung durch fluidische Endschalter selbsttätig erfolgt, wird der Dachhauthaltebügel und mit diesem der hintere Teil des Verdecks bedarfsgerecht nach vorn hochgeklappt oder in seine etwa horizontale Ausgangsstellung zurückgeklappt. Hierbei behält der Hauptspriegel, an dem die Seitenschenkel des Dachhauthaltebügels angeschlagen sind, seine aufgerichtete, im wesentlichen vertikale Stellung bei.

Zum Versenken des Klappverdecks in den Verdeckkasten ist der Hauptspriegel unter Schwenkantrieb durch zwei Hydraulikzylinder umlegbar, die den beiden Verdecksäulen des Hauptspriegels zugeordnet an diesen angreifen, und die ebenfalls karosseriefest abgestützt sind. Dabei fahren die hauptspriegelseitig angelenkten Hydraulikzylinder ein und schieben gleichzeitig die Kolbenstangen der korrespondierenden, haltebügelseitig angelenkten Hydraulikzylinder in ihren Zylinder hinein.

Wegen der automatischen Klappfolgesteuerung aller Verdeckteile ist bereits ein hoher Bedienkomfort gewährleistet. Allerdings muß hierfür in Kauf genommen werden, daß zur Anordnung der beiden verdeckkastennahen Hydraulikzylinder ein erheblicher Einbau und Bewegungsfreiraum erforderlich ist, der sich insbesondere auf die Bautiefe der Bordwände des Fahrzeugs nachteilig auswirkt.

Der Erfindung liegt daher die Aufgabe zugrunde, eine gattungsgemäße Schwenkunterstützung eines Dachhauthaltebügels eines Klappverdecks dahingehend weiterzuentwickeln, daß eine raumsparende Anordnung der schwenkunterstützenden Stangenlemente möglich ist.

Nach der vorliegenden Erfindung ergibt sich die Lösung dieser Aufgabe dadurch, daß das zweite Ende des Stangenelements gelenkig an die zugeordnete Verdecksäule angeschlossen ist. Somit ist in Breitenrichtung des Klappverdecks gesehen eine Anordnung des Stangenelements neben dem unteren Längenabschnitt der Verdecksäule möglich. Auch nimmt das Stangenelement aufgrund seiner Anlenkung an allen Schwenkbewegungen des Hauptspriegels teil, so daß es seine relative Lage zur Verdecksäule nur im Zuge der eigenen Längenänderung geringfügig ändert. Um Verwindungen des Dachhauthaltebügels durch die Unterstützungskräfte des Stangenelements zu vermeiden, wird im Regelfall die beidseitige Schwenkunterstützung des Dachhauthaltebügels zweckmäßig sein, also die Zuordnung von zwei Stangenelementen gleicher Unterstützungskraft zu den beiden Seitenschenkeln des Dachhauthaltebügels.

Vorteilhafte Weiterbildungen des Erfindungsgegenstandes sind den Unteransprüchen zu entnehmen.

Als vorteilhaft ist es anzusehen, wenn das Stangenelement in seiner bei aufgerichtetem Dachhauthaltebügel vorliegenden Stützlänge längenfixiert ist. In diesem Fall kann das längenblockierte Stangenelement gleichzeitig als Lenker dienen, der im Zusammenwirken mit weiteren Getriebegliedern die mechanische Zwangssteuerung des Dachhauthaltebügels in Fahrzeuglängsrichtung übernehmen kann, die zum Eintauchen des Klappverdecks in den Verdeckkasten erforderlich ist.

Zur Längenfixierung sind z.B. mechanische Verrastungen denkbar, die im einfachsten Fall von Hand betätigbar sein können.

Empfehlenswert sind allerdings selbsttätig blockierende Stangenelemente, die keinen Zugriff erfordern. Solche Stangenelemente, die auch als Aufsteller für Klappen oder dgl. in Form sogenannter Gasdruckfedern verwendet werden, sind allgemein bekannt. Als druckschriftlicher Stand der Technik ist hier z.B. auf die DE-A-25 13 302 hinzuweisen, die eine selbsttätig blockierbare pneumatische oder hydropneumatische Teleskopfeder offenbart.

Unter Federkraft längenveränderbare Stangenelemente weisen allerdings den Nachteil auf, daß sie nur in einer Schwenkbewegungsrichtung des Dachhauthaltebügels unterstützend wirken können, während sie den Vorschub in der entgegengesetzten Richtung hemmen.

Daher ist es vorzuziehen, als Stangenelement einen doppeltwirkenden Arbeitszylinder vorzusehen. Letzteres gilt insbesondere dann, wenn ohnehin zur automatischen Verdeckbetätigung eine Druck- und-/oder Saugquelle vorhanden ist, die zur Arbeitszylinderbeaufschlagung mitgenutzt werden kann. In diesem Fall ist jedoch eine permanent an den Arbeitszylinder angeschlossene Schlauchleitung für das Arbeitsmedium erforderlich, die mit der Druck- und-/oder Saugquelle verbunden ist. Die flexible Schlauchleitung muß dabei so verlegt sein, daß sie die Relativbewegungen gegenüber der Karosserie ausgleichen kann, ohne abgequetscht oder beschädigt zu werden. Eine solche Verlegung der Schlauchleitung ist besonders einfach dann möglich, wenn der Arbeitszylinder im lichten Gabelquerschnitt eines hauptlagernahen Endbereichs der zugeordneten Verdecksäule angeordnet ist. Zudem ergibt sich durch diese Art der Anordnung eine besonders kompakte Unterbringung des Stangenelements. Zur Umwandlung des Vorschubs des Stangenelements in eine Schwenkbewegung des Dachhauthaltebügels muß jedoch zwischen den Gabelflächen der Verdecksäule ein haltebügelfester Anschlußhebel vorhanden sein, während der Endbereich des Seitenschenkels funktionsbedingt weiter außen liegen muß als dieser lichte Verdecksäulenquerschnitt, der das Stangenelement aufnimmt. Daher ist zwischen den Gabelflächen am Anlenkpunkt des Dachhauthaltebügels an der Hauptsäule ein Auslegerarm schwenkbar gelagert, der drehfest mit dem gelagerten Ende des Seitenschenkels verbunden ist. Zur drehfesten Verbindung sind übliche Mitnehmerverbindungen geeignet.

Auf längenfixierbare Stangenelemente kann dann verzichtet werden, wenn der Dachhauthaltebügel selbst unter einer Federbelastung in seiner etwa parallel hinter den Dachhauthalteschienen liegenden Versenkstellung gegen zugeordnete Anschläge gehalten ist.

Falls die vorgesehenen Stangenelemente Gasdruckfedern oder ähnliche Druckfederanordnungen sind, können diese gleichzeitig für die erwünschte Federbelastung mitgenutzt werden, indem sie unter einer Übertotpunktanordnung angelenkt werden.

Wegen der toleranzausgleichenden Wirkung dieses Prinzips lassen sich hierbei kostengünstige Stangenelemente verwenden.

Im folgenden sind zwei Ausführungsbeispiele der Erfindung anhand einer zeichnerischen Darstellung näher erläutert.

Hierin zeigen im einzelnen :

Fig. 1 eine schematische Seitenansicht eines Hebelwerks eines Klappverdecks bei geschlossenem Verdeck,

Fig. 2 das Hebelwerk gemäß Fig. 1 bei aufgerichtetem Dachhauthaltebügel,

Fig. 3 eine Seitenansicht des Hebelwerks in den aus Fig. 1 und Fig. 2 ersichtlichen Stellungen mit einer Druckfederanordnung,

Fig. 4 eine Frontalansicht des haltebügelseitigen Anlenkbereiches des Stangenelementes, und

Fig. 5 den schematischen Schnitt der Linie IV-IV in Fig. 1 entsprechend.

Ein nicht näher dargestelltes Klappverdeck eines Kraftwagens, das vollständig in einem Verdeckkasten der Karosserie versenkbar ist, ist mit seinem Seitenwandgestänge in einer zentralen Fahrzeugquerebene an der Karosserie angeschlagen. Zum Schwenkanschlag sind die Seitenwandgestänge an einem Hebelwerk 1 beteiligt, das in beiden Bordwänden versenkt angeordnet ist. Die beiden Hebelwerke 1 sind jeweils in seitlichen karosseriefesten Konsolen 2 gelagert, die vor dem zugeordneten Schenkel des Verdeckkastens liegen. Da die Hebelwerke 1 bezogen auf die Längsmittelebene des Fahrzeugs spiegelbildlich zueinander gestaltet sind, ist aus Vereinfachungsgründen nur das linke Hebelwerk 1 dargestellt. Unmittelbar in der Konsole 2 ist die linke Verdecksäule 3 eines die Dachbreite überspannenden Hauptspriegels gelagert. Die Lagerung erfolgt auf dem Umfang eines konsolfesten Lagerbolzens 4, der eine senkrecht zur Längsmittelebene des Kraftwagens verlaufende Achsrichtung vorgibt. Der Hauptspriegel befindet sich in einer aufgerichteten Stellung in der eine Dachhauthalteschiene 3a der Verdecksäule 3 parallel zur hinteren Scheibenkante einer Seitenscheibe des Kraftwagens verläuft. In dieser Stellung ist er durch eine ausgefahrene Kolbenstange 5 eines Hydraulikzylinders gehalten, dessen Zylinder nicht mehr sichtbar unterhalb der Konsole 2 angeordnet ist. Das untere Ende des Zylinders ist karosserieseitig ortsfest angelenkt. Zur Abstützung der Verdecksäule 3 weist die Kolbenstange 5 endseitig ein Lagerauge 5a auf, das einen zugeordneten Lagerbolzen 6 umgreift. Der Lagerbolzen 6 ist im Endbereich eines verdecksäulenfesten Antriebshebels 7 angeordnet, der von der Verdecksäule 3 nach hinten auskragt. Dadurch ergibt sich bezogen auf den Lagerbolzen 4 ein ausreichender Hebelarm für den Hydraulikzylinder, so daß sich die Verdecksäule 3 durch Einfahren der Kolbenstange 5 in den Zylinder um 90 Grad im Uhrzeigersinn schwenken läßt, wenn das Klappverdeck in den Verdeckkasten versenkt werden soll. Beim Ausfahren der Kolbenstange 5 nimmt die Verdecksäule 3 wieder ihre aufgerichtete Stellung ein, in der sie durch die Kolbenstange 5 abgestützt ist.

Relativ zur aufgerichteten Verdecksäule 3 ist ein den rückwärtigen Abschluß des Klappverdeckes bildender Dachhauthaltebügel 8 um eine horizontale Fahrzeugquerachse schwenkbar. Diese Schwenkbarkeit ist erforderlich, damit ein gegenläufig zum Dachhauthaltebügel 8 angeschlagener Verdeckkastendeckel, auf dem der Dachhauthaltebügel 8 bei geschlossenem Verdeck aufliegt, am Dachhauthaltebügel 8 vorbeigeschwenkt werden kann. Zur Schwenklagerung ist ein zugeordneter linker Seitenschenkel 8a des Dachhauthaltebügels 8 in seinem vorderen Endbereich an der Verdecksäule 3 gelagert. Um einen konsolnahen Anschlag des Seitenschenkels 8a zu ermöglichen, endet der Seitenschenkel 8a in einem nach unten abgewinkelten Winkelhebel 8b, der endseitig am oberen Ende eines Lenkers 9 drehgelagert ist. Der Lenker 9 erstreckt sich schräg nach hinten sowie nach unten, wobei sein unteres Ende gelenkig an die Konsole 2 angeschlossen ist, und dient der Vorschubsteuerung des Dachhauthaltebügels 8 in Fahrzeuglängsrichtung im Zuge des Versenkvorgangs des Hauptspriegels. Zur mechanischen Zwangssteuerung in Abhängigkeit vom Schwenkwinkel der Verdecksäule 3 greift im Mittelbereich des Lenkers 9 ein Mitnehmerhebel 10 gelenkig an, der sich schräg nach unten vorn erstreckt. Mit seinem zweiten Ende ist der Mitnehmerhebel 10 an einer Lasche 11 drehgelagert, die außenseitig auf die Verdecksäule 3 aufgeschweißt ist, und die parallel zum Antriebshebel 7 nach hinten auskragt. Solange die Verdecksäule 3 in der aufgerichteten Stellung verbleibt, ist der Lenker 9 somit über den Mitnehmerhebel 10 schwenkblockiert, so daß eine quasi ortsfeste Schwenklagerung des Winkelhebels 8b am Lenker 9 gegeben ist.

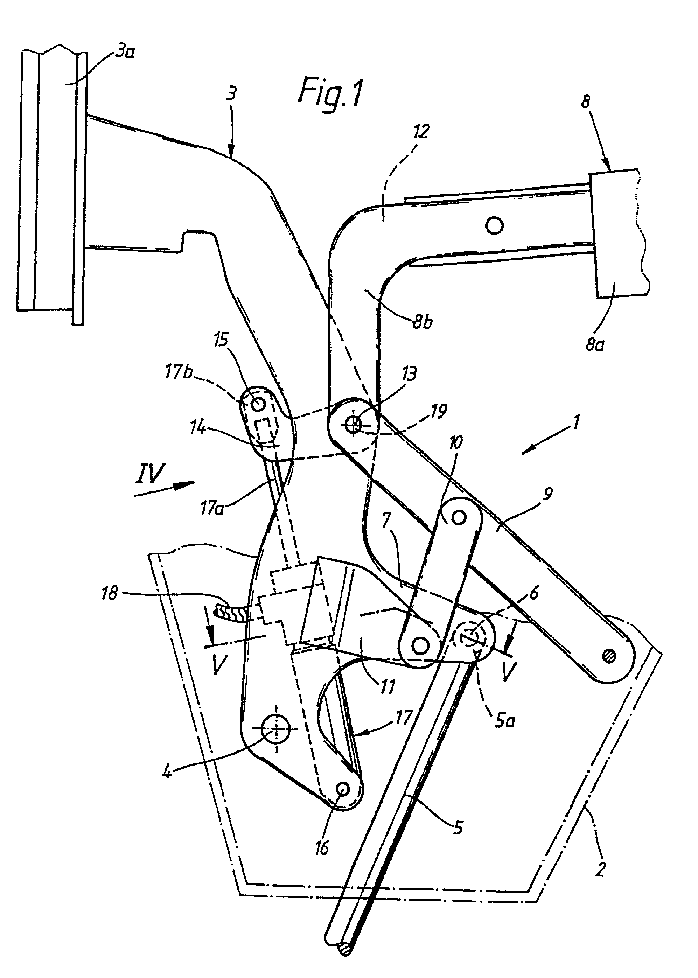

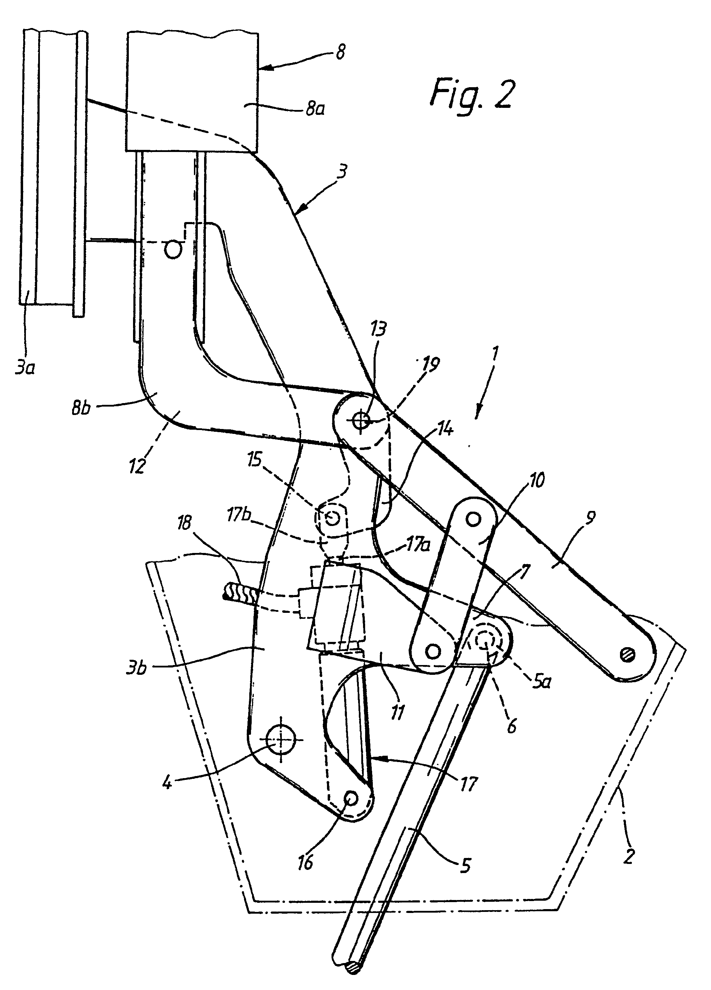

Damit ein Schwenkvorschub auf den Dachhauthaltebügel 8 ausgeübt werden kann, liegt hinter dem Winkelhebel 8b ein zweiter abgewinkelter Hebel 12 gleicher Formgebung. Dieser Hebel 12 ist im Gegensatz zum Winkelhebel 8b jedoch nicht starr sondern über eine Drehschiebeanlenkung an sich bekannter Art mit dem Seitenschenkel 8a verbunden. Hierzu ist der Hebel 12 in nicht dargestellter Weise an einem Gleitstein angelenkt, der längsverschiebbar im Seitenschenkel 8a geführt ist. Das untere Ende des Hebels 12 ist unmittelbar an der Verdecksäule 3 drehbar gelagert. Dabei ist der Drehpunkt so festgelegt, daß er exakt zum Anlenkpunkt des Winkelhebels 8b am Lenker 9 fluchtet, wodurch sich eine gemeinsame geometrische Schwenkachse 13 ergibt. Mit dem Hebel 12 ist ein Auslegerarm 14 drehfest verbunden, der über die Schwenkachse 13 hinausstehend etwa parallel zur Erstreckungsrichtung des Seitenschenkel 8a in entgegengesetzter Richtung auskragt. Das der Schwenkachse 13 abgewandte Ende des Auslegerarms 14 ist mit einem Querbolzen 15 versehen, der axial im Auslegerarm 14 schiebegesichert ist. Am unteren Ende der Verdecksäule 3, das sich hinter dem Lagerbolzen 4 bis unterhalb desselben erstreckt, ist ein zweiter sich senkrecht zur Flächenebene des flachen Profils der Verdecksäule 3 erstreckender Querbolzen 16 angeordnet. An den beiden Querbolzen 15 und 16 sind die Enden eines längenveränderbaren Stangenelements angelenkt, das in den Fig. 1 und 2 aus einem doppeltwirkenden Hydraulikzylinder 17 besteht. Der Hydraulikzylinder 17 steht über eine Schlauchleitung 18 mit einer zentralen hydraulischen Bidruckpumpe in Verbindung, die zur Versorgung aller vorgesehenen Hydraulikzylinder ausgelegt ist. Die Ansteuerung des Hydraulikzylinders 17 erfolgt in bekannter Weise über elektromagnetische Ventile, wobei die Ausgangsstellung durch übliche Mikroschalter abgetastet ist. Dadurch kann der Hydraulikzylinder 17 bedarfsgerecht automatisch druck- oder saugbeaufschlagt werden. Bei Druckbeaufschlagung fährt die Kolbenstange 17a des Hydraulikzylinders 17 ein, wobei der Dachhauthaltebügel 8 aus seiner Auflagestellung auf dem Verdeckkasten nach Figur 1 in seine aufgerichtete Stellung gemäß Figur 2 verschwenkt wird, in der er durch Aufrechterhaltung des Druckes im Hydraulikzylinder 17 gehalten ist. Danach wird zum Versenken des Klappverdeckes der Verdeckkastendeckel geöffnet und, wenn dieser seine geöffnete Endstellung erreicht hat, wird die Kolbenstange 5 eingefahren, wobei die Verdecksäule 3 umgelegt wird. An dieser Rückschwenkbewegung des Hauptspriegels nimmt der Dachhauthaltebügel 8 in einer etwa Figur 2 entsprechenden Schwenkstellung zur Verdecksäule 3 teil, wobei er allerdings aufgrund seiner mechanischen Zwangssteuerung über den Lenker 9 und den Mitnehmerhebel 10 in Abhängigkeit vom Schwenkwinkel der Hauptsäule 3 nach vorn verschoben wird, damit ein Hinabtauchen in die Öffnung des Verdeckkastens möglich ist. Bei dieser Rückschwenkbewegung wirkt der Hydraulikzylinder 17 wie ein starrer Lenker, der den Hebel 12 in seiner Figur 2 entsprechenden Parallelstellung zur Dachhauthalteschiene 3a fixiert, während aufgrund der Gleitsteinanlenkung eine geringe Relativauslenkung des Seitenschenkels 8a gegenüber der Dachhauthalteschiene 3a möglich bleibt.

Diese Lenkercharakteristik des Hydraulikzylinders 17 bleibt erhalten, bis die Verdecksäule 3 im Zuge eines erneuten Schließvorgangs des Klappverdecks ihre aufgerichtete Stellung gemäß Figur 2 wieder eingenommen hat. Anschließend ist der Hydraulikzylinder 17 saugbeaufschlagbar, wobei die Kolbenstange 17a ausgefahren wird bis die Auflagestellung des Dachhauthaltebügels 8 auf dem Verdeckkasten wieder erreicht ist.

Unter gleicher Anordnung wie der Hydraulikzylinder 17 könnte anstelle desselben z.B. eine Gasdruckfeder verwendet werden, mit der jedoch nur eine Schwenkunterstützung in einer Schwenkrichtung möglich wäre. Auch die Gasdruckfeder könnte die Lenkerfunktion des Hydraulikzylinders 17 übernehmen, wenn sie in der eingefahrenen Stellung blockierbar wäre. Als Richtungssinn für die Schwenkunterstützung käme sowohl eine Hubunterstützung im Sinne einer Federbelastung des Dachhauthaltebügels 8 im Uhrzeigergegensinn als auch eine Federbelastung im Uhrzeigersinn infrage. Bei letzterer müsste der Dachhauthaltebügel 8 zwar von Hand in seiner aufgerichteten Stellung festgehalten werden, jedoch würde er bei manueller Betätigung des Klappverdeckes die Bedienung vereinfachen, da die Klappabfolge dadurch teilweise funktionell vorgegeben wäre.

Anstelle eines in der Stützlänge fixierbaren bzw. fixierten Stangenelements ist es ferner denkbar, zwar den Schwenkvorschub mittels eines längenveränderbaren Stangenelements auf den Dachhauthaltebügel 8 auszuüben, aber den Dachhauthaltebügel 8, nachdem dieser seine hauptspriegelnahe Klappstellung erreicht hat, durch eine Federbelastung relativ zu den Verdecksäulen 3 in dieser Klappstellung zu halten.

Eine Anwendung dieses Prinzips beim Schwenkantrieb des Dachhauthaltebügels 8 durch Hydraulikzylinder 17 hat den Vorteil, daß diese nach Abschluß ihres Arbeitshubes ohne Einfluß auf die Klappstellung des Dachhauthaltebügels 8 drucklos geschaltet werden können.

Ist demgegenüber eine manuelle Verdeckbetätigung verbunden mit einer Druckfederanordnung zur Schwenkunterstützung des Dachhauthaltebügels 8 vorgesehen, so läßt sich die den Dachhauthaltebügel 8 antreibende Druckfederanordnung vorteilhaft zum Fixieren der Klappstellung des Dachhauthaltebügels 8 mitnutzen.

Diese Doppelnutzung der Druckfederanordnung ist relativ problemlos möglich, wenn die Druckfederanordnung den Dachhauthaltebügel 8 im Uhrzeigergegensinn um die geometrische Achse 13, also auf den Hauptspriegel zu, schwenkbelastet. Hierbei müßte lediglich die Ausfederlänge der Druckfederanordnung ausreichend lang bemessen und der Schwenkwinkel des Dachhauthaltebügels 8 gegenüber den Verdecksäulen 3 durch Anschläge begrenzt sein.

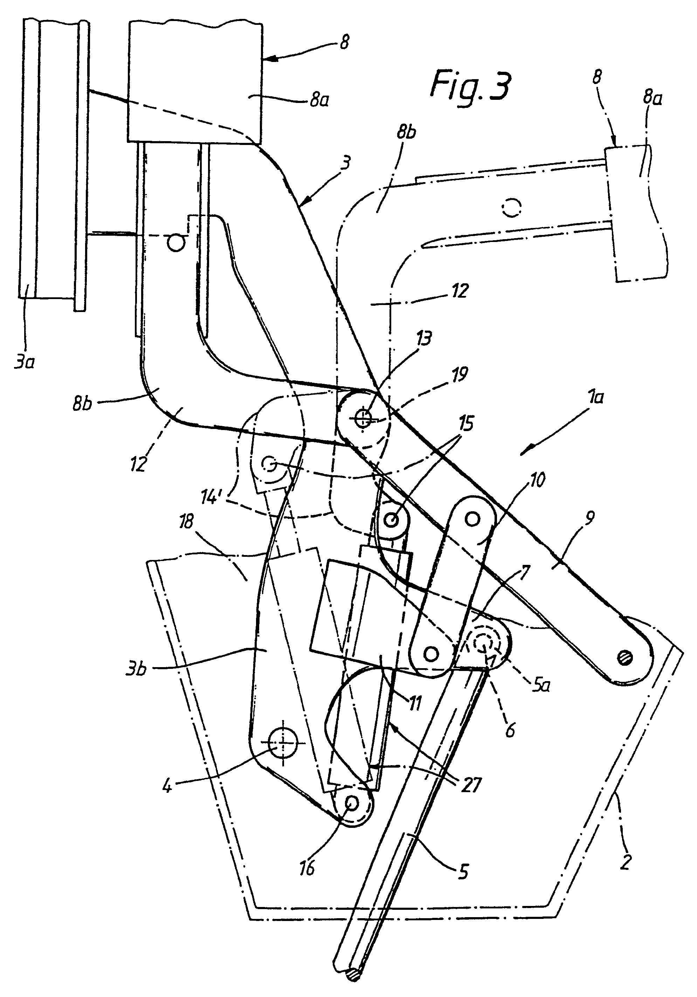

Im Falle einer Druckfederbelastung des Dachhauthaltebügels 8 im Uhrzeigersinn, also einer Unterstützung der Rückschwenkbewegung vom Hauptspriegel weg, bleibt eine Doppelnutzung der Druckfederanordnung trotzdem möglich. Eine hierzu vorgesehene Anlenkung einer wegen ihres geringen Gewichts vorzugsweise einzusetzenden Gasdruckfeder 27 im Hebelwerk 1a ist aus Fig. 3 zu ersehen. Da das Hebelwerk 1a weitgehend mit dem bereits beschriebenen Hebelwerk 1 übereinstimmt, sind aus Vereinfachungsgründen nur die funktionellen Unterschiede erläutert, wobei baugleiche Teile mit identischen Bezugszeichen versehen sind.

Die Darstellung des Hebelwerks 1a umfaßt beide zu den Fig. 1 und 2 korrespondierende Stellungen, wobei die Fig. 2 entsprechende Zwischenstellung mit durchgezogenen Linien gezeichnet ist. In dieser Zwischenstellung ragt ein Auslegerarm 14', der auf der Achse 19 gelagert und drehfest mit dem ebenfalls auf der Achse 19 gelagerten Hebel 12 verbunden ist, schräg nach hinten von der Achse 19 ab, wobei er nach unten gerichtet ist.

Dabei ist der Auslegerarm 14' so bemessen, daß sein den Querbolzen 15 lagerndes Ende in Fahrzeuglängsrichtung gesehen, hinter einer Verbindungslinie zwischen der Lagerachse 19 und dem Querbolzen 16 liegt.

An die Querbolzen 15 und 16 sind die Enden der Gasdruckfeder 27 angelenkt, wodurch auch die sich entlang der Mittellängsachse der Gasdruckfeder 27 erstreckende Wirkungslinie der Federkraft in einem Abstand hinter der Lagerachse 19 verläuft. In Abhängigkeit des Abstandes dieser Wirkungslinie von der Lagerachse 19 erzeugt die Kraft der nur geringfügig ausgeschobenen Gasdruckfeder 27 ein links drehendes Moment um die Lagerachse 19, durch welches der Dachhauthaltebügel 8 im Uhrzeigergegensinn schwenkbeaufschlagt ist. Da dieser jedoch in der aufgerichteten Zwischenstellung über nicht dargestellte Anschläge an den Verdecksäulen 3 abgestützt ist, wird er durch die Ausfederkraft der Gasdruckfeder 27 in seiner Parallelstellung zu den Dachhauthalteschienen 3a gehalten. Die Haltekräfte müssen dabei so bemessen sein, daß diese Parallelstellung auch im Zuge eines Versenkvorganges des Klappverdecks zuverlässig erhalten bleibt.

In der letzten Schließphase des Klappverdecks muß der aufrecht stehende Dachhauthaltebügel 8 zunächst durch manuellen Zugriff soweit zurückgeschwenkt werden, daß die Übertotpunktstellung der Gasdruckfeder 27 überdrückt ist, wonach die Wirkungslinie derselben linksseitig der Lagerachse 19 verläuft.

Da die Gasdruckfeder 27 nach dem Passieren ihrer Totpunktstellung im entgegengesetzten Richtungssinn am Auslegerarm 14' angreift, wird nunmehr ein rechtsdrehendes Moment auf den Dachhauthaltebügel 8 ausgeübt, das die Rückschwenkbewegung desselben zunehmend unterstützt. Diese Unterstützungskraft bleibt unter weiterem Ausfedervorschub der Gasdruckfeder 27 erhalten, bis der Dachhauthaltebügel 8 seine durch unterbrochene Linien dargestellte Auflagestellung auf dem Verdeckkastendeckel eingenommen hat.

Unabhängig davon, ob ein Hydraulikzylinder 17 oder eine Gasdruckfeder 27 oder dgl. als längenveränderbares Stangenelement eingesetzt wird, kann die Anordnung so getroffen werden, daß das Stangenelement innenseitig neben einem unteren Endbereich 3b der Verdecksäule 3 liegt, und daß es im Zuge der Längenänderung eine zur Breitseite des Endbereichs 3b parallele Bewegungsbahn aufweist, die weitgehend innerhalb der Breitenerstreckung des Endbereichs 3b verlaufen kann. Dadurch ist kaum zusätzlicher Bauraum erforderlich.

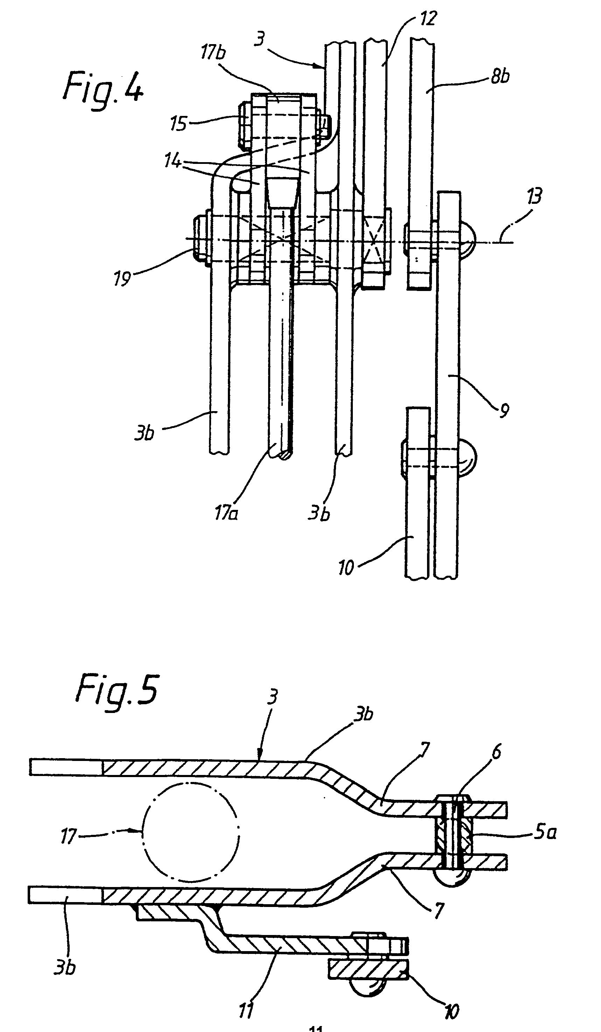

Damit eine Krafteinleitung der Unterstützungskräfte nicht zu Verwindungen des Verdeckgestells führt, die die Leichtgängigkeit beim Klappvorgang beeinträchtigen könnten, ist es vorteilhaft, wenn der untere Endbereich 3b gabelförmig gestaltet ist. Wie aus den Figuren 4 und 5 zu erkennen ist, läßt sich der Hydraulikzylinder 17 bzw. ein anderes Stangenelement in diesem Fall zwischen den beiden Gabelwangen des Endbereichs 3b anordnen, wobei der Abstand der Gabelwangen voneinander etwas größer sein muß als der Durchmesser des Hydraulikzylinders 17 bzw. eines anderen Stangenelements. Eine mittige Bewegungsbahn und eine günstige Krafteinleitung in den Auslegerarm 14 läßt sich dabei erreichen, wenn eine Lagerachse 19 in beiden Gabelwangen des Endbereiches, Bohrungen in diesen durchsetzend, drehgelagert ist, und wenn sie zwischen den beiden Lagerstellen nach Art einer Kurbelwellenkröpfung gestaltet ist. Dadurch kann ein endseitiges Lagerauge 17b Seitenführung erhalten. Zur Drehmomentübertragung zwischen den Lagerstellen der Lagerachse 19 sowie im Durchgangsbereich des Hebels 12 ist die Lagerachse 19, wie durch Kreuzlinien angedeutet als Vierkant oder Kerbverzahnung ausgebildet, wodurch sich eine absolut sichere Drehmomentumwandlung des Vorschubs der Kolbenstange 17a in die gewünschte Schwenkbewegung des Hebels 12 ergibt.

Aus Gewichtsgründen ist es ferner wünschenswert, daß der Antriebshebel 7 einstückig an die Verdecksäule 3 angeformt ist. Gleichzeitig wurde eine gleichmäßige Kraftaufnahme des Antriebsvorschubes der Kolbenstange 5 über beide Gabelwangen des Endbereichs 3b angestrebt. Um die Lagerbreite des Lagerauges 5a gering halten zu können, was auch dem Bauraumverbrauch zugute kommt, gehen die Gabelwangen des Endbereichs 3b unter Abstandsverkürzung zueinander einstückig in jeweils einen Antriebshebel 7 über, zwischen denen das Lagerauge 5a in Normalbreite paßgenau seitengeführt ist.

**Ansprüche**

1. Schwenkunterstützung eines den unteren Abschluß eines Klappverdecks bildenden Dachhauthaltebügels (8), dessen Seitenschenkel (8a) an zugeordneten Verdecksäulen (3) eines Hauptspriegels angeschlagen sind, mittels eines längenveränderbaren, beidendig angelenkten Stangenelements, das im Seitenwandbereich des Klappverdecks angeordnet ist, wobei ein Ende des Stangenelements an den zugewandten Seitenschenkel des Dachhauthaltebügels angeschlossen ist, **dadurch gekennzeichnet,** daß das zweite Ende des Stangenelements (Zylinder 17, 27) gelenkig an die zugeordnete Verdecksäule (3) angeschlossen ist.

2. Schwenkunterstützung nach Anspruch 1, **dadurch gekennzeichnet,** daß die bei aufgerichtetem Dachhauthaltebügel (8) vorliegende Stützlänge des Stangenelements (Zylinder 17, 27) fixierbar ist.

3. Schwenkunterstützung nach Anspruch 2, **dadurch gekennzeichnet,** daß das Stangenelement (Zylinder 17, 27) in der Stützstellung selbsttätig längenfixiert ist.

4. Schwenkunterstützung nach Anspruch 1, 2 oder 3, **dadurch gekennzeichnet,** daß das Stangenelement teleskopartig ausgebildet ist.

5. Schwenkunterstützung nach Anspruch 4, **dadurch gekennzeichnet,** daß als Stangenelement eine pneumatische Feder (Gasdruckfeder 27) vorgesehen ist.

6. Schwenkunterstützung nach Anspruch 4, **dadurch gekennzeichnet,** daß als Stangenelement ein doppeltwirkender Arbeitszylinder (Hydraulikzylinder 17) vorgesehen ist.

7. Schwenkunterstützung nach Anspruch 1, **dadurch gekennzeichnet,** daß zur Anlenkung des Stangenelements (Zylinder 17, 27) am Dachhauthaltebügel (8) ein drehfest mit seinem gelagerten Ende (Hebel 12) verbundener Auslegerarm (14) genutzt ist.

8. Schwenkunterstützung nach Anspruch 1, **dadurch gekennzeichnet,** daß das Stangenelement (Zylinder 17, 27) im lichten Gabelquerschnitt eines hauptlagernahen Endbereichs (3b) der Verdecksäule (3) angeordnet ist.

9. Schwenkunterstützung nach Anspruch 1, **dadurch gekennzeichnet,** daß der Dachhauthaltebügel (8) unter einer Federbelastung in seiner verdecksäulennahen Klappstellung gehalten ist.

10. Schwenkunterstützung nach Anspruch 9, **dadurch gekennzeichnet,** daß die Federbelastung auf der Ausfederkraft des Stangenelements (Gasdruckfeder 27) beruht.

11. Schwenkunterstützung nach Anspruch 10, **dadurch gekennzeichnet,** daß die Anlenkpunkte des Stangenelements (Gasdruckfeder 27) an der Verdecksäule (3) und am Hebel (12) derart zueinander angeordnet sind, daß die sich entlang der Mittellängsachse des Stangenelements (Gasdruckfeder 27) erstreckende Wirkungslinie der Federkraft bei aufgerichtetem Dachhauthaltebügel (8) hinter der Lagerachse (19) und nach Abschluß einer ersten Phase der Rückschwenkbewegung des Dachhauthaltebügels (8) vor der Lagerachse (19) verläuft.

**Claims**

1. Pivoting assistance for, forming the bottom closure of a folding roof, a roof sheeting support bracket (8), the side arms (8a) of which are mounted on associated roof columns (3) of a main roof support, by means of a variable-length rod element which is articulated at both ends and which is disposed in the side wall area of the folding roof, one end of the rod element being connected to the facing side arm of the roof sheeting support bracket, characterised in that the second end of the rod element (cylinder 17, 27) is articulatingly connected to the associated roof column (3).

2. Pivoting assistance according to Claim 1, characterised in that it is possible to fix the bracing length of the rod element (cylinder 17, 27) which is available when the roof sheeting support bracket (8) is erected.

3. Pivoting assistance according to Claim 2, characterised in that the length of the rod element (cylinder 17, 27) in the bracing position is automatically fixed.

4. Pivoting assistance according to Claim 1, 2 or 3, characterised in that the rod element is of telescopic construction.

5. Pivoting assistance according to Claim 4, characterised in that a pneumatic spring (pressurised gas spring 27) is provided as the rod element.

6. Pivoting assistance according to Claim 4, characterised in that a double-acting working cylinder (hydraulic cylinder 17) is provided as the rod element.

7. Pivoting assistance according to Claim 1, characterised in that an extension arm (14) which is rotationally rigidly connected at its mounted end (lever 12) is used for articulating the rod element (cylinder 17, 27) on the roof sheeting support bracket (8).

8. Pivoting assistance according to Claim 1, characterised in that the rod element (cylinder 17, 27) is disposed within the bifurcated cross-section of an end portion (3b) of the roof column (3) which is close to the main bearing.

9. Pivoting assistance according to Claim 1, characterised in that the roof sheeting support bracket (8) is spring biased to keep it in its folded-down position close to the roof column.

10. Pivoting assistance according to Claim 9, characterised in that the spring biasing is based on the spring extension force of the rod element (pressurised gas spring 27).

11. Pivoting assistance according to Claim 10, characterised in that the points of articulation of the rod element (pressurised gas spring 27) on the roof column (3) and on the lever (12) are so disposed in relation to one another that the line of effect of the spring force extending along the central longitudinal axis of the rod element when the roof sheeting support (8) is erected extends behind the bearing axis (19) and in front of the bearing axis (19) upon conclusion of a first phase of the backwards pivoting movement of the roof sheeting support bracket (8).

## Revendications

1. Support de pivotement d'un étrier (8) de maintien de couverture de toit, formant la fermeture inférieure d'une capote rabattable et dont les branches latérales (8a) sont montées sur des colonnes de capote (3) associées d'un arceau principal au moyen d'un élément de soutien, de longueur variable, articulé aux deux extrémités et qui est disposé dans une zone de paroi latérale de la capote, une extrémité de l'élément de soutien étant reliée à la branche latérale correspondante de l'étrier de maintien de couverture de toit, caractérisé en ce que la seconde extrémité de l'élément de soutien (cylindre 17, 27) est reliée de façon articulée à la colonne de capote (3) associée.

2. Support de pivotement selon la revendication 1, caractérisé en ce que la longueur de service en appui de l'élément de soutien (cylindre 17, 27), situé en avant quand l'étrier (8) de maintien de couverture de toit est orienté verticalement, peut être fixée.

3. Support de pivotement selon la revendication 2, caractérisé en ce que la longueur de l'élément de soutien (cylindre 17, 27) est fixée automatiquement dans la position de service en appui.

4. Support de pivotement selon la revendication 1, 2 ou 3, caractérisé en ce que l'élément de soutien est pourvu d'une structure télescopique.

5. Support de pivotement selon la revendication 4, caractérisé en ce que, comme élément de soutien, il est prévu un ressort pneumatique (ressort à gaz comprimé 27).

6. Support de pivotement selon la revendication 4, caractérisé en ce que, comme élément de soutien, il est prévu un cylindre de travail à double effet (cylindre hydraulique 17).

7. Support de pivotement selon la revendication 1, caractérisé en ce que, pour l'articulation de l'élément de soutien (cylindre 17, 27) sur l'étrier (8) de maintien de couverture de toit, on utilise un bras de liaison (14) relié de façon non tournante à son extrémité d'articulation (levier 12).

8. Support de pivotement selon la revendication 1, caractérisé en ce que l'élément de soutien (cylindre 17, 27) est disposé dans une ouverture d'une zone extrême fourchue (3b), proche du palier principal, de la colonne de capote (3).

9. Support de pivotement selon la revendication 1, caractérisé en ce que l'étrier (8) de maintien de couverture de toit est maintenu dans sa position de rabattement, proche de la colonne de capote, par une sollicitation élastique.

10. Support de pivotement selon la revendication 9, caractérisé en ce que la sollicitation élastique est fonction de la force élastique d'extension de l'élément de soutien (ressort à gaz comprimé 27).

11. Support de pivotement selon la revendication 10, caractérisé en ce que les points d'articulation de l'élément de soutien (ressort à gaz comprimé 27) sur la colonne de capote (3) et sur le levier (12) sont disposés l'un par rapport à l'autre de telle sorte que la ligne d'action de la force élastique, s'étendant le long de l'axe longitudinal central de l'élément de soutien (ressort à gaz comprimé 27) soit située, quand l'étrier (8) de maintien de couverture de toit est dirigé vers le haut, en arrière de l'axe de pivot (19) et, après terminaison d'une première phase du mouvement de pivotement de recul de l'étrier (8) de maintien de couverture de toit, en avant de l'axe de pivot (19).

*Fig.1*

Fig. 2

Fig.3

*Fig.4*

*Fig.5*